# EUROPÄISCHE PATENTSCHRIFT

(11) **EP 2 177 303 B1**
(45) Veröffentlichungstag und Bekanntmachung des Hinweises auf die Patenterteilung: **17.08.2016**
(21) Anmeldenummer: 09173146.3
(22) Anmeldetag: 15.10.2009
(51) Int. Cl.: B23K 31/02, B23K 11/00, B23K 11/26, B23K 11/02, B23K 11/14, B23D 65/00, B23D 61/02, B28D 1/12

(54) **Herstellverfahren für ein Trennwerkzeug und Trennwerkzeug**
Production method for a separation tool and separation tool
Procédé de fabrication d'un outil de séparation et outil de séparation

(30) Priorität: 15.10.2008 DE 202008013561 U; 19.05.2009 DE 202009007222 U
(43) Veröffentlichungstag der Anmeldung: 21.04.2010
(73) Patentinhaber: EURODIMA GmbH & Co KG, 5073 Wals-Himmelreich (AT)
(72) Erfinder: Stangassinger, Wolfgang, 5550 Radstadt (AT); Bernhofer, Peter, 5301 Eugendorf (AT)
(74) Vertreter: Ernicke, Klaus Stefan

(56) Entgegenhaltungen:
- EP-A2- 1 389 503
- JP-U- 55 142 258
- US-A- 3 048 160
- US-A- 3 072 470
- US-A- 4 786 779
- US-B1- 6 638 152

## Beschreibung

Die Erfindung betrifft ein Trennwerkzeug sowie ein Herstellverfahren mit den Merkmalen im Oberbegriff des Verfahrens- und Sachhauptanspruchs, wie z.B. aus der US-A-3072470 bekannt.

Aus der Praxis sind Trennwerkzeuge in Form von Trennscheiben bekannt, die einen runden scheibenförmigen Grundkörper mit einem außenseitigen Kranz von Trennsegmenten oder sog. Schneidsegmenten aufweisen. Andererseits kennt man auch Trennwerkzeuge in Form von Bohrkronen, die am stirnseitigen Rohrrand einen Kranz von Trenn- oder Bohrsegmenten haben. Die Trennsegmente weisen eine Trägermatrix aus einem Sintermaterial auf, in dem eine Vielzahl kleiner und harter Schleif- oder Schneidpartikel eingebettet ist. Bei diesen harten Partikeln kann es sich um Diamantpartikel, Korundpartikel oder dergleichen handeln. Bei den vorbekannten Trennwerkzeugen sind die Trennsegmente mit dem Grundkörper durch Laserschweißen verbunden. Diese Verbindungstechnik ist aufwändig und bringt relativ viel Wärmeenergie an den Verbindungsstellen ein, was beim Abkühlen zu Verzügen oder anderen ungünstigen Nebeneffekten führen kann. Ferner dürfen an der Verbindungsstelle die Trennsegmente wegen dieser Laserschweißtechnik keine harten Schleifpartikel, insbesondere keine Diamantpartikel, aufweisen. Die vorbekannten Trennsegmente müssen daher im Fußbereich diamantfrei sein. Dies bedingt einen erhöhten Fertigungsaufwand. Außerdem haben die Trennsegmente eine begrenzte Standzeit, weil nach Abtrag der diamanthaltigen Segmentbereiche und bei Erreichen des Fußbereichs keine Trenn-, Schneid- oder Schleifwirkung mehr eintritt.

Es ist Aufgabe der vorliegenden Erfindung, ein verbessertes Trennwerkzeug sowie ein Verfahren zur Herstellung eines Trennwerkzeugs aufzuzeigen.

Die Erfindung löst diese Aufgabe mit den Merkmalen im Verfahrens- und Sachhauptanspruch.

Beim beanspruchten Trennwerkzeug erfolgt die Verbindung zwischen dem Grundkörper und dem einen oder mehreren Trennsegmenten durch ein elektrisches Kondensatorentladungsschweißen.

Durch die Impulse werden der Grundkörper und die Trennsegmente an der Verbindungsstelle mit lokaler Begrenzung teigig oder schmelzflüssig und gehen eine feste Verbindung miteinander ein. Die Verbindungsstelle ist entsprechend als Kondensatorentladungs-Schweissstelle ausgebildet.

Das elektrische Kondensatorentladungsschweißen hat energetische Vorteile und belastet das Trennwerkzeug bzw. dessen Grundkörper und Trennelement(e) weniger als vorbekannte Schweißverfahren. Insbesondere wird der Wärmeeintrag verringert und ein Verzug vermieden. Die Maß- und Formhaltigkeit des Trennwerkzeugs wird verbessert. Zudem kann der Herstellungsprozess verkürzt und vereinfacht werden. Auch der Fertigungsaufwand und die Kosten können gesenkt werden.

Dieses Kondensatorentladungsschweißen lässt sich auch mit harten Schleifpartikeln und insbesondere Diamantpartikeln durchführen. Die Schweißverbindung hat eine vergleichbare Festigkeit und Zähigkeit wie beim vorbekannten Laserschweißen. Die Trennsegmente unterliegen durch die Impulsschweißtechnik jedoch geringeren Anforderungen und Belastungen, wobei das Material der Trennsegmente auch eine höhere Homogenität haben kann. Insbesondere ist es bei den beanspruchten Trennsegmenten nicht mehr zwingend erforderlich, dass der Fußbereich an der Verbindungsstelle von harten Schleifpartikeln, insbesondere Diamantpartikeln, frei oder in deutlich verringertem Maß dotiert ist.

Für das Kondensatorentladungsschweißen ist es günstig, wenn an der Verbindungsstelle eine Stromkonzentration durch zahnartige, buckelartige oder sonstige die Kontaktfläche verkleinernde Vorsprünge besteht, die am Trennsegment und/oder am Grundkörper angeordnet sein können. Eine Zahnbildung oder Rändelung am Trennsegment ist hierbei günstig. Sie kann herstellerseitig bereits eingebracht werden. Hierdurch können die Grundkörper eine beliebige und nach anderen Kriterien optimierte Formgebung haben.

Die beanspruchten Trennsegmente lassen sich einfacher, besser und wirtschaftlicher herstellen. Durch die Dotierung mit harten Schleifpartikeln und insbesondere Diamantpartikeln auch im Fußbereich können die Trennsegmente in ihrer gesamten Höhe für den Trennprozess benutzt werden und haben eine entsprechend längere Standzeit. Dies verbessert auch die Wirtschaftlichkeit des Trennwerkzeugs und der Trennsegmente.

Die Trennsegmente können an einer oder beiden Seiten eine oder mehrere Vertiefungen aufweisen. Diese Formgebung ist für die Kühlung der Trennsegmente günstig. Einerseits können beim Nasstrennen, insbesondere Nassschneiden oder Nassbohren, kühlende Flüssigkeitspartikel mitgerissen und für den Wärmeaustausch am Trennsegment gehalten werden. Andererseits ist auch beim Trockentrennen oder -schneiden bzw. -bohren eine verbesserte Kühlwirkung durch mitgerissene Luftpartikel vorhanden. Besonders günstig ist eine Formgebung und Anordnung der Vertiefungen in einem Waffelmuster. Diese regelmäßige Form hat auch Vorteile für den seitlichen Schneid- oder Schleifabtrag in Schlitzen. Diese Formgebung der Seitenwände von Trennelementen hat eigenständige Bedeutung und kann auch bei konventionellen Ausführungen von Trennsegmenten mit einem Löt- oder Schweißfuß Verwendung finden.

Durch das materialschonende Kondensatorentladungsschweißen können die Trennsegmente eine homogene Struktur und gleichmäßige Partikelverteilung haben. Hierbei ist es außerdem möglich, die vorzugsweise gesinterten Trennsegmente liegend zu pressen und mit beispielsweise einem Querschnitts-Schichtaufbau zu versehen, der an einer oder beiden Außenseiten härter als im Mittelbereich ist. Dies hat Vorteile für die Standzeit und Formhaltigkeit des Trennwerkzeugs und der Trennsegmente. Außerdem findet der Abtrag am Trennsegment gleichmäßiger statt, was die Nutzbarkeit und die Qualität der Trennsegmente auch über einen längeren Betriebszeitraum sichert.

Ein homogener Materialaufbau der Trennsegmente ist aus Gründen der Wirtschaftlichkeit und des Herstellungsaufwands günstig. Dies ist aber nicht zwingend. Es können auch inhomogene Trennsegmente eingesetzt werden, die z.B. im Fußbereich oder Verbindungsbereich eine geringere Konzentration an harten Schleifpartikeln haben.

Ferner ist es möglich, die Konzentration von Schleifpartikeln im Segmentkörper in einer oder in mehreren Richtungen, insbesondere in vertikaler und/oder horizontaler Richtung, zu variieren, was fließend oder schichtweise geschehen kann. Während eines Trenn-, Bohr- oder Schneidvorgangs können Schleifpartikel aus dem Trennsegment herausfallen, welche jedoch eine Zeit lang im Bereich des Werkzeugeingriffs verbleiben und weiter am Materialabtrag beteiligt sind. Auch ein Herausfallen verbrauchter Schleifpartikel ist zum Erhalt der Schleif- oder Schneidleistung vorteilhaft.

Eine lokal unterschiedliche Konzentrierung von Schleifpartikeln kann in unterschiedlicher Weise und z.B. dadurch geschehen, dass beim Befüllen einer Pressform für die Trennsegmente die Beimengung von harten Schleifpartikeln über der Zeit kontinuierlich oder schrittweise variiert wird. So kann ein Trennsegment beispielsweise an der Oberseite eine wesentlich höhere Konzentration an Schleifpartikeln aufweisen, als an der Unterseite. Der Fußbereich eines Trennsegments kann auch im Wesentlichen frei von Schleifpartikeln ausgebildet sein, was auch für die Festigkeit des Trennsegments im Bereich der Schweißnaht vorteilhaft sein kann.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 und 2:: ein Trennwerkzeug in Form einer Trennscheibe mit mehreren Schneidsegmenten in Seitenansicht und in einem abgebrochenen Querschnitt,
- Figur 3 und 4:: ein Trennwerkzeug in Form einer Bohrkrone in Draufsicht und in einem Querschnitt gemäß Schnittlinie IV-IV von Figur 3,
- Figur 5 bis 9:: eine erste und zweite Variante eines Trennsegments in verschiedenen Ansichten,
- Figur 10 bis 14:: eine dritte und vierte Variante eines Trennsegments in verschiedenen Ansichten,
- Figur 15 bis 18:: eine fünfte Variante eines Trennsegments mit einer Seitenwand im Waffelmuster und mit beidseitiger Fase,
- Figur 19 bis 22:: eine Abwandlung des vorigen Ausführungsbeispiels mit anderen Randfasen,
- Figur 23 bis 28:: eine letzte Variante eines Trennsegments mit beidseitigem Waffelmuster,
- Figur 29 und 30:: eine Untersicht auf Fußbereiche eines Trennsegments,
- Figur 31 bis 36:: verschiedene Trennsegmente im Querschnitt,
- Figur 37:: eine Schemadarstellung einer Schweißeinrichtung zur Herstellung von Trennwerkzeugen und
- Figur 38 und 39:: ein Trennwerkzeug in Form einer Bohrkrone im Querschnitt entsprechend Figur 4.

Die Erfindung betrifft ein Trennwerkzeug (1), welches mit einem Grundkörper (4) und mit mindestens einem Trennsegment (8), vorzugsweise mit mehreren Trennsegmenten (8), ausgerüstet ist. Die Erfindung betrifft ferner die Herstellung eines Trennwerkzeuges.

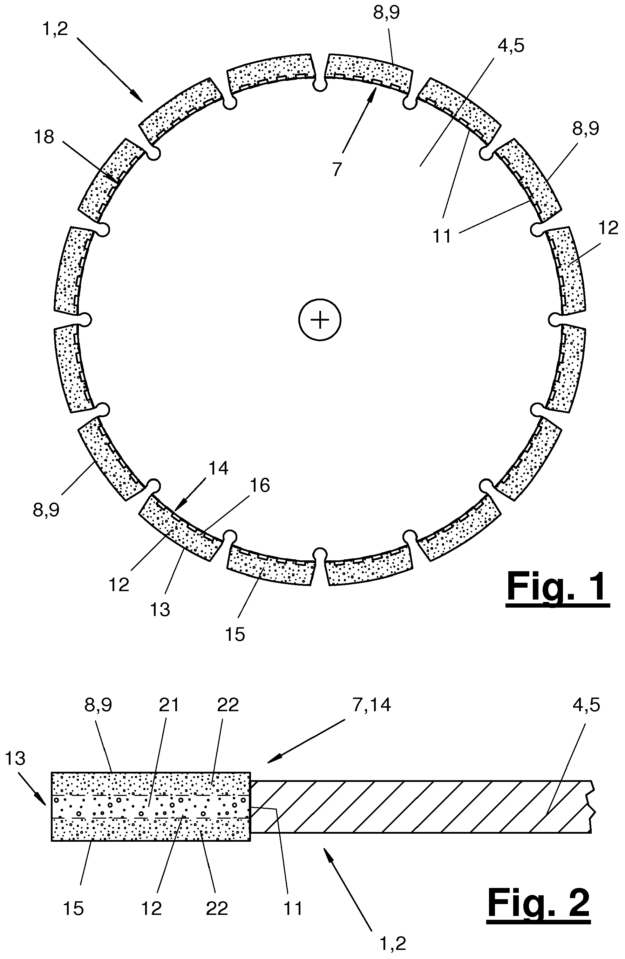

Das Trennwerkzeug (1) kann in unterschiedlicher Weise ausgebildet sein. Figur 1 und 2 sowie 3 und 4 zeigen hierfür zwei mögliche Varianten. Darüber hinaus sind weitere Abwandlungen machbar, beispielsweise als Sägebänder, Sägeseile oder dergleichen. Das Trennwerkzeug (1) sorgt für einen schleifenden oder schneidenden Materialabtrag am bearbeiteten Werkstück.

In der Variante von Figur 1 ist das Trennwerkzeug (1) als Trennscheibe (2) ausgebildet. Diese besteht aus einem Grundkörper (4), der als sog. kreisrundes scheibenförmiges Stammblatt (5) ausgebildet ist und der eine geeignete Aufnahme für einen Werkzeughalter hat. Dies kann z.B. eine zentrale Kreisbohrung sein. Der Werkzeughalter kann Bestandteil eines Handarbeitsgeräts oder eines Standgeräts mit einem Motor oder mit manueller Bedienung sein. Der Grundkörper (4) kann aus einem elektrisch leitenden Material, z.B. aus Metall, insbesondere aus Stahl, bestehen.

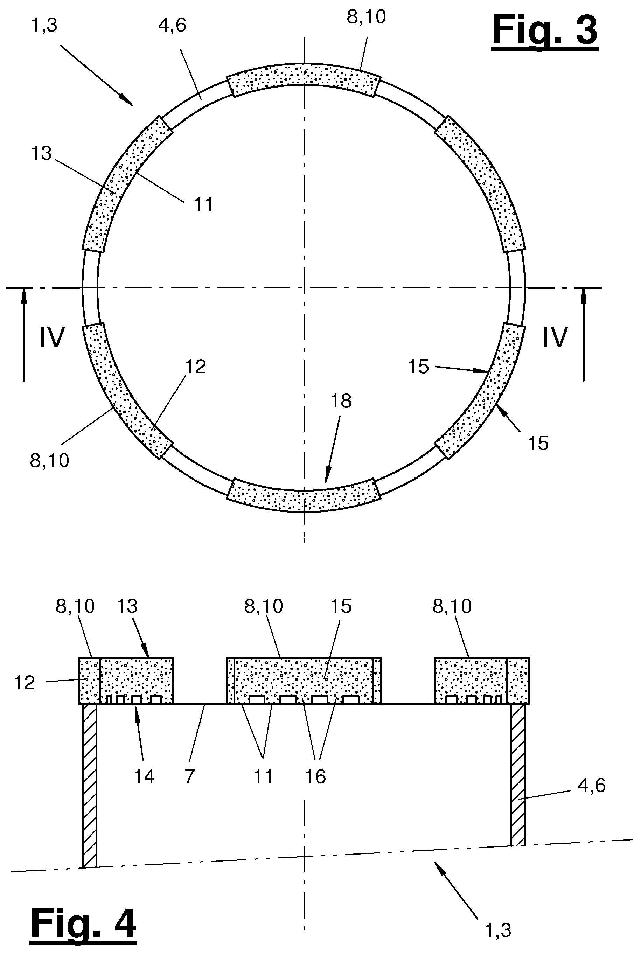

Umfangseitig sind am Grundkörper (4) mehrere Trennsegmente (8) mit einer vorzugsweise gleichmäßigen Verteilung angeordnet Die Trennsegmente (8) sind hier als Schneidsegmente (9) ausgebildet und ragen radial nach außen. Im Stammblatt (5) können zwischen den in Umfangsrichtung beabstandeten Trennsegmenten (8) am Rand (7) Vertiefungen oder Ausnehmungen vorhanden sein, wobei das Stammblatt (5) auch im Innenbereich massiv oder unterbrochen ausgebildet sein kann. Wie Figur 2 und 4 verdeutlichen, können die Trennsegmente (8) bevorzugt breiter bzw. dicker als der Grundkörper (4) sein und beidseits über diesen vorstehen. Die Trenn- oder Schneidsegmente (8,9) schneiden oder schleifen an ihrer radialen Außenseite (13) und ggf. an ihren Seitenwänden (15).

Die Trennsegmente (8) bestehen zumindest im Fußbereich (14) ebenfalls aus einem elektrisch leitenden Material. Ihr elektrischer Widerstand kann kleiner als derjenige des Grundkörpers (4) sein.

Grundsätzlich kann die Formgebung des Grundkörpers (4) und der Trennsegmente (8) beliebig sein. Figur 1 und 2 geben nur ein Ausführungsbeispiel an, das beliebig abgewandelt werden kann.

Die Trennsegmente (8) sind an ihrer Unterseite (14) bzw. im Fußbereich mit dem Außenrand (7) des Grundkörpers (4) durch Kondensatorentladungsschweißen oder ein anderes elektrisches Impulsschweißverfahren verbunden und bilden entsprechende Verbindungsstellen (11). Hierbei werden über eine Schweißvorrichtung (25) mit einer steuerbaren Stromquelle (26) ein oder mehrere kurzzeitige elektrische Schweißimpulse mit hoher Spannung oder ggf. auch hoher Stromstärke durch die Materialpaarung geschickt, wobei an der Verbindungsstelle (11) der Grundkörper (4) und ggf. das Trennsegment (8) aufweichen und teigig oder schmelzflüssig werden und dabei eine Schweißverbindung miteinander eingehen.

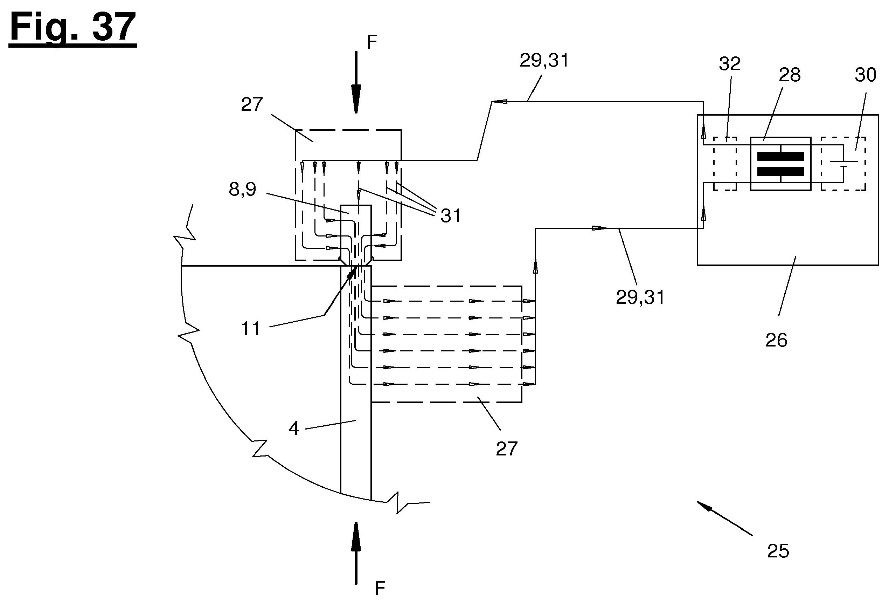

Figur 37 zeigt eine schematische Darstellung des Stromflusses (31) während einer Schweißung. Die Schweißstromquelle (26) weist einen Energiespeicher, insbesondere einen Kondensator (28) auf, der über eine Ladeschaltung (nicht dargestellt) mit einem Netzanschluss (30) verbunden ist. Mittels einer Zündeinrichtung (32) kann ein hoher, im Kondensator (28) gespeicherter Energiebetrag in sehr kurzer Zeit als Schweißimpuls durch Leitungen (29) und Elektroden (27) in die Schweißstelle (11) zwischen Trennsegment (8) und Grundkörper (4) eingeleitet werden. Während und/oder nach dem Schweißimpuls können der Grundkörper (4) und das Trennsegment (8) mit einer Presskraft F aneinander gepresst werden.

Der während einer Schweißung eingebrachte Energiebetrag, verteilt sich in etwa proportional zum Widerstand der vorhandenen Materialien, wodurch diese entsprechend unterschiedlich stark erhitzen. Besonders hoch ist der Energieeintrag am Übergangswiderstand der Verbindungsstelle (11). Es kann jedoch von Vorteil sein, dass der Grundkörper (4) und die Trennsegmente (8) unterschiedliche elektrische Widerstände aufweisen, wodurch deren Erwärmung und Neigung zur Verflüssigung gezielt beeinflussbar sind.

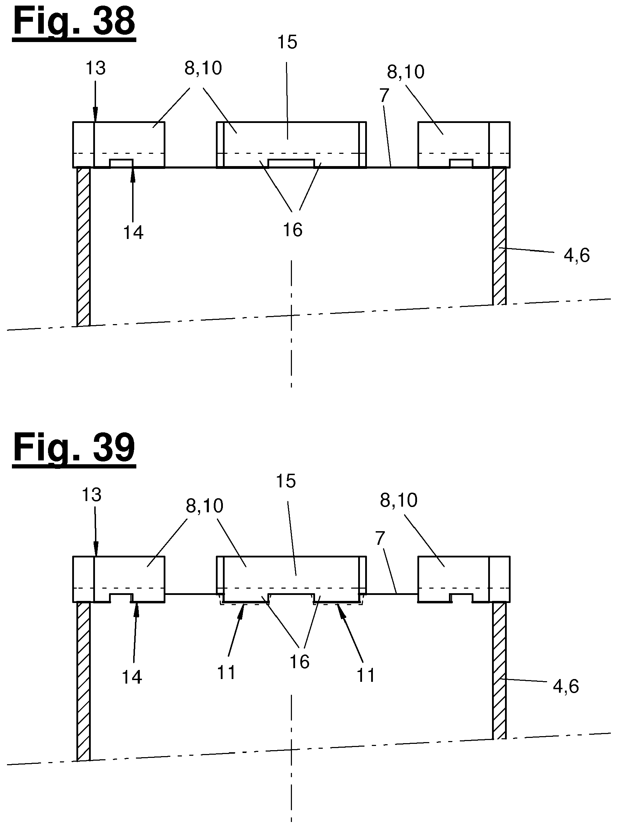

Figur 38 und 39 zeigen eine bevorzugte Ausführungsform des Schweißverfahrens am Beispiel einer Bohrkrone (3). Das Verfahren ist in entsprechender Form auch für Trennscheiben (2) oder Trennwerkzeuge mit anderer Form anwendbar und nicht auf Bohrkronen (3) beschränkt.

Durch eine Vorgabe der elektrischen Widerstände kann die sich bildende Schweißstelle (11) derart beeinflusst werden, dass ein unterhalb der Vorsprünge (16) der Trennsegmente (8) liegender Materialbereich des Grundkörpers (4) verstärkt aufschmilzt. Während und/oder kurz nach einem Schweißimpuls kann das Trennsegment (8) mittels einer Presskraft (F) im wesentlichen senkrecht zur Verbindungsstelle (11) mit dem Grundkörper (4) zusammengepresst werden. Hierbei wird das Trennsegment (8) beispielsweise mit den Vorsprüngen (16) in das plastifizierte Material des Grundkörpers (4) eingedrückt. Die Schweißverbindung entsteht vor allem im Bereich der Vorsprünge (16).

Die neben oder zwischen den Vorsprüngen (16) liegenden Bereiche der Unterseite (14) des Trennsegments (8) können beim Zusammenpressen mit dem Randbereich (7) des Grundkörpers (4) in definierte Anlage gebracht werden. Dies kann ein Anlage- oder Berührungskontakt ohne Schweißverbindung sein. Die Anlage ist besonders vorteilhaft für die Ausrichtung der Trennsegmente (8) am Grundkörper (4). So kann beispielsweise durch eine unverformte und stützende Anlage sichergestellt werden, dass alle Oberseiten (13) von an einem Grundkörper (4) befestigten Trennsegmenten (8) auf einer gemeinsamen Höhenlinie liegen, was beim Trennen Vorteile für das Eingriffs- und Vibrationsverhalten des Trennwerkzeugs (1) sowie eine gleichmäßige Verteilung der Schneidkräfte auf die vorhandenen Trennsegmente (8) hat. Ferner kann einem ungleichmäßigen Verschleiß der Trennsegmente (8) vorgebeugt werden.

Die Stromimpulse können so kurz sein und die eingebrachte elektrische Leistung kann so niedrig sein, dass die Materialpaarung an der Verbindungsstelle (11) nicht bis in die Flüssigphase aufschmilzt. Alternativ kann der Energieeintrag beispielsweise durch längere Stromimpulse, durch größere Ströme oder durch eine Sequenz von mehreren Stromimpulsen erhöht werden, wobei an der Verbindungsstelle (11) zumindest einer der Schweißpartner, vorzugsweise der Grundkörper (4), stellenweise plastifiziert, insbesondere aufschmilzt.

Durch den im Vergleich zu vorbekannten Befestigungsverfahren verringerten Energieeintrag können die Wärmebelastung und die Verzugserscheinungen am Grundkörper (4) und den Trennsegmenten (8) gering sein. Dies kommt einer verbesserten Formstabilität und Maßhaltigkeit des Trennwerkzeugs (1) zu Gute.

In der Variante von Figur 3 und 4 ist das Trennwerkzeug (1) als Bohrkrone (3) ausgebildet, deren Grundkörper (4) ein Tragrohr (6) ist, das z.B. eine zylindrische Gestalt hat. Am freien stirnseitigen Rand (7) des Tragrohrs (6) sind ein oder mehrere Trennsegmente (8) mit axialer Ausrichtung angeordnet. Diese können eine der Rohrkrümmung angepasste Wölbung (18) haben. Die Trennsegmente (8) sind als Bohrsegmente (10) ausgebildet, die in Umfangsrichtung mit gegenseitigem Abstand am Randbereich (7) angeordnet sind.

Auch bei dieser Variante sind die Trennsegmente (8) mit dem Grundkörper (4) durch Kondensatorentladungsschweißen oder ein anderes elektrisches Impulsschweißverfahren verbunden, wobei an den Verbindungsstellen (11) eine entsprechende Schweißverbindung entsteht.

Für elektrische Impulsschweißverfahren ist es günstig, wenn die Schweißpartner an der Verbindungsstelle (11) eine den Strom konzentrierende Formgebung haben, mit der die Kontaktfläche der Schweißpartner verkleinert wird. Die Stromkonzentration ist in Figur 37 skizziert, wobei die Stromflusslinien im Bereich der Verbindungsstelle (11) auf den minimalen Querschnitt zusammengedrängt sind. Zu diesem Zweck haben in den Ausführungsformen von Figur 1 bis 4 die Trennsegmente (8) am Fußbereich (14) und an der Verbindungsstelle (11) einen oder mehrere Vorsprünge (16).

Die Vorsprünge (16) können die gleiche oder im wesentlichen gleiche Höhe aufweisen und z.B. als Zähne, Buckel oder dgl. ausgebildet sein. Die Vorsprünge (16) können sich z.B. entlang des Trennsegments (8) mit Vertiefungen, bzw. zurückversetzten Bereichen abwechseln und eine längslaufende Profilierung bilden. Die Anordnung kann auch quer oder schräg gerichtet sein und eine entsprechende Profilierung bilden. Mehrere solcher Zähne können in der Art einer Rändelung an der Unterseite bzw. im Fußbereich (14) der Trennsegmente (18) angebracht sein.

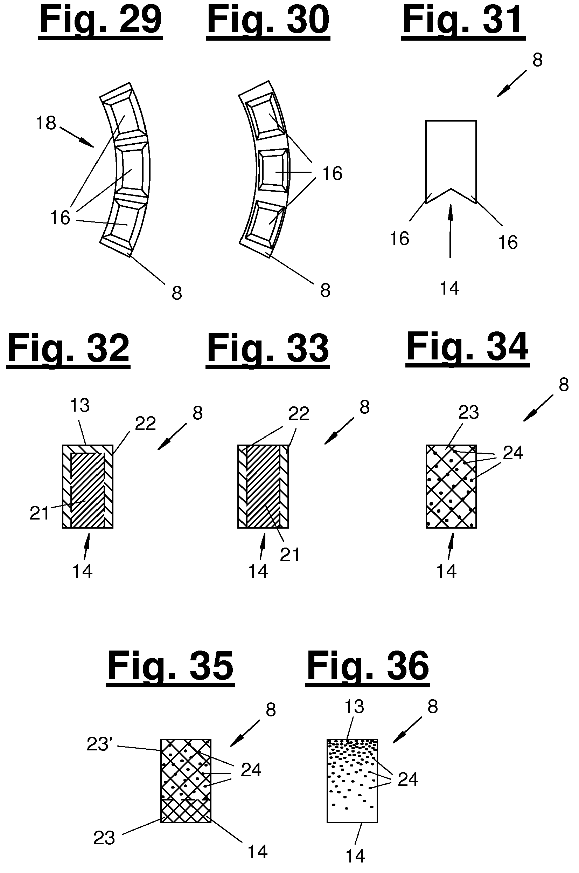

In Abwandlung der gezeigten Ausführungsformen können z.B. nur zwei randseitige Vorsprünge (16) mit einer zentralen Vertiefung oder Ausnehmung dazwischen vorhanden sein, wie dies beispielsweise in Figur 31 dargestellt ist. Die Vertiefung oder Ausnehmung kann auch als Nut oder Fase mit beispielsweise halbrundem, elliptischem oder keilförmigem Querschnitt ausgebildet sein.

Zwischen den Vorsprüngen (16) und dem Randbereich (7) des Grundkörpers (4) können je nach Ausbildung der Profilierung und der eingebrachten Schweißenergie beispielsweise flächige, linienförmige, punktförmige oder linsenförmige Schweißstellen (11) entstehen.

Die Randbereiche (10) des Grundkörpers (4) können in beiden Ausführungsformen eine gleichmäßig runde oder ebene Form ohne Vorsprünge haben. Alternativ können die Vorsprünge (16) am Randbereich (7) des Grundkörpers (4) angeordnet sein und als Rändelung ausgebildet sein, wobei die Trennsegmente (8) eine ebene Unterseite (14) haben. Ferner ist eine Vorsprungbildung an beiden Teilen (4,8) möglich.

Die Trennsegmente (8) besitzen einen Segmentkörper (12), der aus mindestens einem geeigneten Trägermaterial (23,23') besteht und eine Vielzahl sehr harter Schleif- oder Schneidpartikel (24) enthält, welche den Materialabtrag am Werkstück bewirken. Die harten Schleifpartikel (24) sind vorzugsweise als Diamantpartikel ausgebildet. Alternativ können diese harten Partikel (24) aus Korund oder einem anderen geeigneten Schleif- oder Schneidmaterial bestehen. Die harten Schleif- oder Schneidpartikel (24) können schlecht oder nicht elektrisch leitend sein.

Das Trägermaterial (23,23') kann weicher sein und eine Grundmatrix aufweisen. Vorzugsweise handelt es sich um ein pulverartiges Material, das auch aus verschiedenen Werkstoffen, z.B. Metallen, Kunststoff und dergleichen, bestehen kann. Das Trägermaterial (23,23') ist bevorzugt elektrisch leitend.

Vorzugsweise bestehen die Segmentkörper (12) aus einem Sintermaterial, das in einem Sinterprozess gepresst und unter Hitze verbacken wird. Hierbei kann die Herstellung der Trennsegmente (8) in einem mehrstufigen Prozess mit z.B. drei oder vier Stufen erfolgen. Bei einem dreistufigen Prozess kann eine Pressform für ein Trennsegment (8) mit Trägermaterial (23,23') und harten Schleif- oder Schneidpartikeln (24) vollständig befüllt, die Füllung anschließend kalt gepresst und in einem dritten Schritt gesintert werden. Während des Einfüllens kann gegebenenfalls die Beimengung von harten Schleif- oder Schneidpartikeln (24) gleichmäßig oder über der Einfüllzeit variiert und unterschiedlich dosiert werden. Dies ergibt eine gleichmäßig oder schichtenweise variierende Partikelkonzentration im Trägermaterial (23,23').

Bei einem mehrstufigen Prozess kann auch zuerst der für den Fußbereich (14) des Trennsegments (8) vorgesehene Teil der Pressform mit einem ersten Trägermaterial (23) allein oder zusammen mit beigegebenen harten Schleifpartikeln (24) befüllt werden. Der Fußbereich (14) ist der zur Impulsschweißverbindung vorgesehene Segmentteil. Anschließend kann der restliche Bereich der Pressform mit einem anderen Trägermaterial (23') und einer ggf. anderen Konzentration von harten Schleif- oder Schneidpartikeln (24) befüllt werden. In einer Variante kann auch die Mischung des Trägermaterials (23,23') während des Einfüllens über der Zeit und/oder örtlich veränderlich sein.

Die vorgenannten Verfahren können alternativ abgewandelt werden. Die Zahl der mehreren unterschiedlichen Trägermaterialien (23,23') oder Materialzusammensetzungen können variieren und größer als zwei sein.

Der Segmentkörper (12) kann harte Schleif- oder Schneidpartikel (24) unterschiedlicher Art und Härte beinhalten, die in das Trägermaterial (23,23') bzw. die Trägermatrix eingebettet sind. Die Diamantpartikel (24) können aus einem natürlichen oder künstlichen Diamantmaterial oder anderen geeigneten Materialien, z.B. Bohrnitrit, Korrund, Diamantine oder dgl. bestehen.

Das Trägermaterial (23,23'), das auch als Bindung bezeichnet wird, kann in seiner Zusammensetzung und in seinen Bindeeigenschaften so gewählt werden, dass die harten Schleif- oder Schneidpartikel (24) im Trägermaterial (23,23') gehalten werden, solange sie noch Schneiden bzw. eine Schneidwirkung besitzen. Sind die kornartigen Schleif- oder Schneidpartikel (24) jedoch stumpf, können sie aus dem Trägermaterial (23,23') ausbrechen. Hierdurch kann auch das die Ausbruchstelle umgebende Trägermaterial (23,23') abgetragen werden, sodass neue Schleif- oder Schneidpartikel (24) an die Oberfläche gelangen und eine Abtragswirkung entfalten können. Die zwischen dem Trägermaterial (23,23') und den Schleif- oder Schneidpartikeln (24) entwickelte Korn- oder Partikelhaltekraft ist zu diesem Zweck begrenzt.

Andererseits ist im Bereich der Verbindungsstelle (11) eine hohe mechanische Festigkeit des Gesamtgefüges aus dem Trägermaterial (23,23') und den Schleif- oder Schneidpartikeln (24) von Vorteil. Bei einer hohen Partikelkonzentration und einer damit zusammenhängenden Festigkeitsminderung kann zum Ausgleich eine Erhöhung der Binnenfestigkeit des Trägermaterials (23,23') von Vorteil sein. Dies kann gegen die vorgenannte Korn- oder Partikelhaltekraft abgeglichen und optimiert werden. Hierbei kann es auch günstig sein, die Oberfläche der Schleif- oder Schneidpartikel (24) aufzurauhen, z.B. durch Ätzen. Das Aufrauhen der Schneidpartikel (24) ist auch vorteilhaft für deren Schneidwirkung.

Die Segmentkörper (12) können eine weitgehend homogene Zusammensetzung aufweisen, wobei die harten Schleif- oder Schneidpartikel (24), insbesondere die Diamantpartikel, sich in allen Bereichen des Segmentkörpers (12) und insbesondere auch im Fußbereich (14) und einer eventuell dort vorhandenen Rändelung (16) befinden können.

Die Verteilung der harten Schleif- oder Schneidpartikel (24) bzw. der Diamantpartikel im Segmentkörper (12) kann gleichmäßig sein. Sie kann alternativ örtlich variieren. Figur 2 und Figur 32 bis 36 zeigen hierzu mögliche Ausführungsformen.

Das Trennsegment (8) hat in Figur 2 im Querschnitt einen Schichtaufbau, der sich in Längsrichtung des Trennsegments (8) bzw. in Umfangsrichtung des Grundkörpers (4) durchzieht. Der Segmentkörper (12) kann z.B. einen Mittelbereich (21) und zwei beidseitige Randbereiche (22) mit unterschiedlicher Partikeldotierung aufweisen. Im Mittelbereich (21) befinden sich eine kleinere Zahl oder eine kleinere Dichte von harten Schleif- oder Schneidpartikeln (24) bzw. Diamantpartikeln im Trägermaterial (23,23'). Der Mittelbereich (21) ist dadurch weicher und hat an der außen liegenden Oberseite (13) eine geringere Schleif- und Schneidwirkung als die beidseits angrenzenden Randbereiche (22). In diesen Randbereichen (22) ist besagte Partikelkonzentration höher. Diese Randbereiche (22) sind dadurch härter und haben eine stärkere Schleif-, Schneid- oder Abtragswirkung. Durch den Schichtaufbau ist der Verschleiß des Trennsegments (8) gleichmäßiger, insbesondere an der Oberseite (13). Das Trennsegment (8) behält dadurch auch über die Standzeit seine gleichmäßige Form. Durch den weicheren Mittelbereich (21) gibt es insbesondere nicht die bei konventionellen Trennsegmenten zu beobachtende Ballenform oder konvexe Wölbung an der Oberseite (18), die durch einen verstärkten Abtrag im Randbereich des Trennsegments entsteht und für ungleichmäßige Schnittbilder sorgt.

In Figur 32 ist ein Trennsegment (8) mit erhöhter Konzentration von Schneid- oder Schleifpartikeln (24) im seitlichen Randbereich (22) und an der Oberseite (13) dargestellt, während Figur 34, 35 und 36 Trennsegmente (8) mit im Höhenverlauf variierter Konzentration von Schneid- oder Schleifpartikeln (24) im Trennsegment (8) zeigen. Das Trennsegment (8) von Figur 35 weist hierbei einen Fußbereich (14) auf, der frei von harten Partikeln (24) ist und aus einem anderen Trägermaterial (23') besteht. Das Trennsegment (8) von Figur 36 hat einen kontinuierlich von der Oberseite (13) zur Unterseite (14) hin abnehmenden Konzentrationsverlauf von harten Partikeln (24), der an der Unterseite (14) gegen Null gehen kann.

Der vorbeschriebene Schichtaufbau kann auch bei konventionellen Trennsegmenten mit Löt- oder Schweißfuß und dort verringerter Diamantkonzentration vorteilhaft eingesetzt werden. Er hat insoweit eine eigenständige erfinderische Bedeutung.

Das Trennsegment (8) in der homogenen oder in der inhomogenen Ausführung und insbesondere mit dem vorbeschriebenen Schichtaufbau von Figur 2 sowie Figur 32 und 33 kann mit seiner Breitseite liegend gesintert und gepresst werden. Dies ist insbesondere zur Erzielung des beschriebenen Schichtaufbaus günstig. Hierbei werden die Schicht bildenden Materialien nacheinander in die Sinterform eingefüllt und bilden die übereinander liegenden Bereiche oder Schichten (21,22), die anschließend in dem Sinterprozess verpresst und verbacken werden. Dieses Herstellungsverfahren kann auch mit der bei konventionellen Trennsegmenten gewünschten verringerten Diamantkonzentration im Fußbereich durchgeführt werden, wobei diese Konzentrationsbeeinflussung durch eine geeignete Fülltechnik, z.B. eine örtlich getrennte Einspeisung aus zwei verschiedenen Zuführeinrichtungen mit unterschiedlichen Partikel- oder Diamantkonzentrationen erzeugt wird.

Alternativ oder zusätzlich ist es möglich, die Beimengung von harten Partikeln (24) während des Füllens zeitlich und/oder örtlich unterschiedlich zu dosieren, womit eine besonders genaue Verteilung und Konzentrierung der Schneid- oder Schleifpartikel (24) möglich ist. Auch können die Zusammensetzung des Trägermaterials (23,23') und damit die Festigkeit der Bindung und/oder der elektrische Widerstand gezielt lokal beeinflussbar sein.

Die in Figur 2 sowie Figur 32 bis 36 in Verbindung mit Schneidsegmenten (9) gezeigten und beschriebenen Segmentausbildungen können auch bei allen anderen Arten und Formen von Trennsegmenten (8), beispielsweise bei den in Figur 3 und 4 gezeigten Bohrsegmenten (10) Verwendung finden.

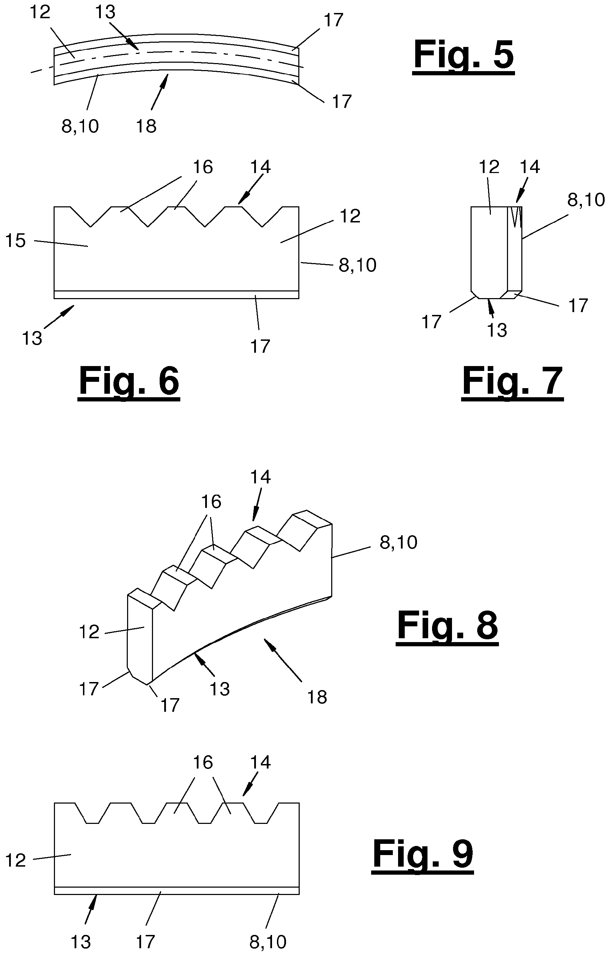

Figur 5 bis 8 zeigen im Detail die Formgebung einer ersten Variante von Trennsegmenten (8), die hier als Bohrsegmente (10) ausgebildet sind. Diese können eine gerade Formgebung oder wie in den Zeichnungen dargestellt, eine Formgebung mit einer Wölbung (18) aufweisen, die im wesentlichen der Krümmung des Tragrohrs (6) entspricht. Die gezeigten Trennsegmente (8) haben an der Oberseite (13), welche die außen liegende Trenn- und Schneidfläche bildet, eine im Mittelbereich ebene Formgebung und beidseits anschließende schräge Fasen (17). Am gegenüber liegenden Fußbereich (14) sind ein oder mehrere der besagten Vorsprünge (16) vorhanden.

Mit einer solchen Formgebung ist ein Trennsegment (8) universal verwendbar und lässt sich wahlweise durch Löten oder durch Kondensatorentladungsschweißen bzw. durch ein anderes elektrisches Impulsschweißverfahren mit dem Grundkörper (4) verbinden. Für die besagte Impulsschweißtechnik können die Vorsprünge (16) verwendet werden, wobei diese Segmentseite dann den Fußbereich bildet und die Oberseite (13) den außen liegenden Schneidbereich darstellt. Für eine Lötverbindung wird das Trennsegment (8) umgedreht, wodurch die im wesentlichen ebene oder ggf. mit ein oder zwei randseitigen Fasen (17) versehene Oberseite zum Fußbereich wird und am Grundkörper (4) angelötet wird. Die dann nach außen weisenden Vorsprünge (16) können dann Schneidzähne bilden, die für den Abtrag und ggf. das Anschärfen des Werkzeugs vorteilhaft sind.

Die Vorsprünge (16) haben in den Varianten von Figur 5 bis 8 und 9 unterschiedliche Zahnformen. In der ersten Variante von Figur 5 bis 8 beträgt der Winkel zwischen den Zahnflanken ca. 90°, wobei die Zähne oder Vorsprünge (16) außenseitig abgeflacht sind und mit ihren benachbarten Zahnflanken am Zahngrund V-förmig zusammenstoßen. In der Variante von Figur 9 beträgt der Winkel zwischen den Zahnflanken ca. 60°, wobei am Zahngrund jeweils eine Abflachung und eine U-ähnliche Formgebung entsteht.

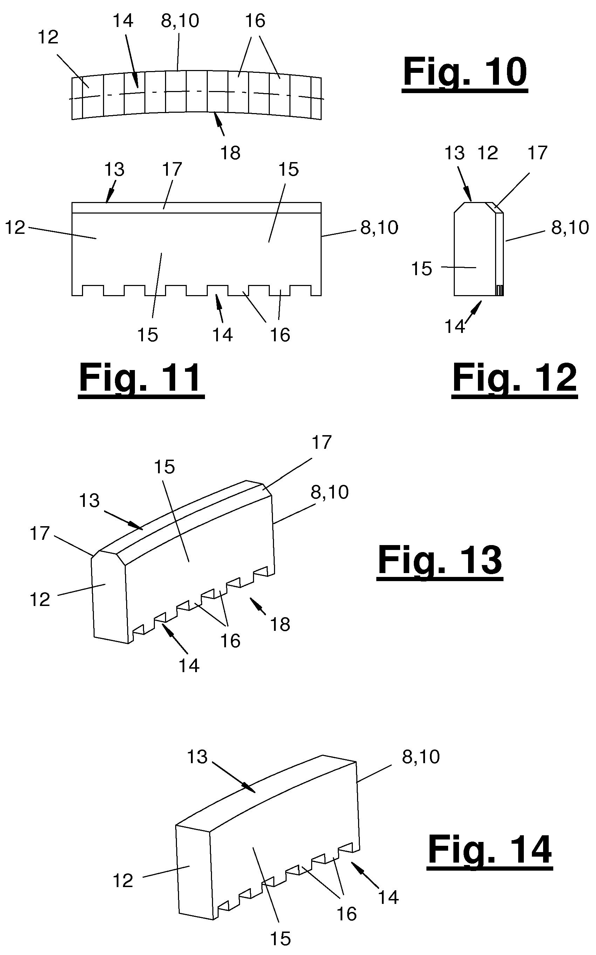

In der dritten Variante von Figur 10 bis 13 ist ein ähnliches Trennsegment (8) oder Bohrsegment (10) wie in den ersten beiden Varianten dargestellt, welches ebenfalls je nach Lage für eine Lötverbindung oder eine Impulsschweißverbindung eingesetzt werden kann. Die Vorsprünge oder Zähne (16) sind hier als regelmäßiges Rechteck- oder Zinnenprofil ausgeführt.

Die Trennsegmente (8) können auch eine Krümmung haben. In der Variante von Figur 10 bis 13 ist an der schneidenden Oberseite (13) beidseits des ebenen Mittelbereichs eine randseitige Fase (17) vorgesehen. In der Variante von Figur 14 ist die Oberseite (14) fasenlos und durchgehend eben. Die gezeigten Trennsegmente (8,10) können ebenfalls einen geraden Verlauf oder eine Wölbung oder Krümmung (18) haben.

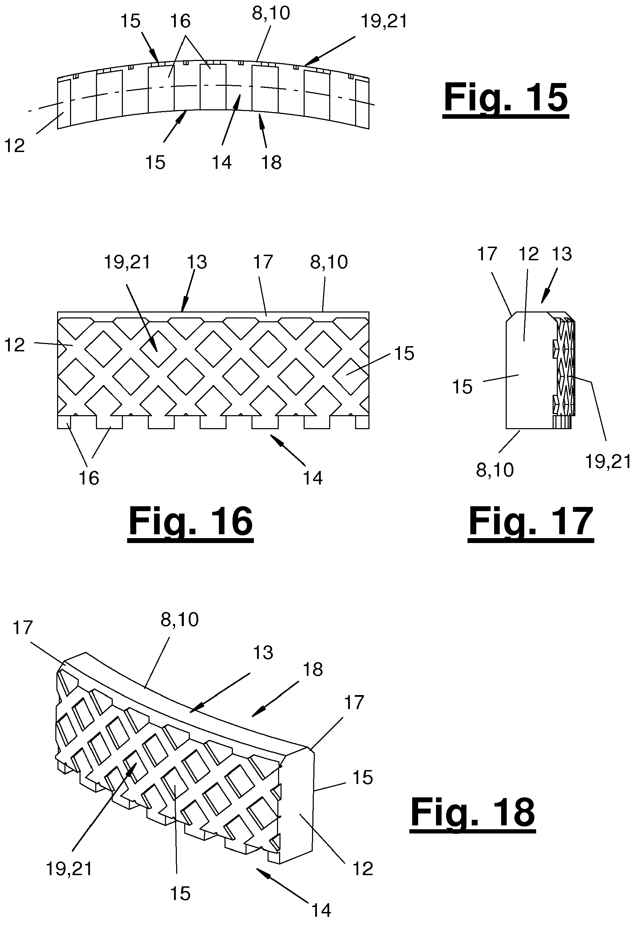

In der Ausführungsform von Figur 15 bis 18 ist ein Trennsegment (8) dargestellt, welches wiederum als Bohrsegment (10) gestaltet sein kann und ähnlich wie in den vorherigen Ausführungsbeispielen im Fußbereich (14) Vorsprünge (16) und an der Oberseite (13) zwei randseitige Fasen (17) aufweisen kann. Das Trennsegment (8) kann auch gerade sein oder die gezeigte Wölbung (18) aufweisen. Die Ausführungsform von Figur 15 bis 18 unterscheidet sich von den vorherigen Ausführungsbeispielen durch die Gestaltung der Seitenwand (15) des Trennsegments (8). Eine Seitenwand (15), insbesondere die in Einbaustellung am Grundkörper (4) nach außen weisende Seitenwand (15) weist mindestens eine Vertiefung (19) auf. Vorzugsweise sind mehrere Vertiefungen (19) vorhanden. Diese können gleichmäßig oder ungleichmäßig verteilt und ausgebildet sein. Im gezeigten Ausführungsbeispiel weist die Seitenwand (15) ein Waffelmuster (21) auf, welches von rechtwinkelig zueinander verlaufenden und einander kreuzenden erhabenen Stegen und dazwischen liegenden Vertiefungen (19) gebildet wird. Die Stege verlaufen schräg zur Segmentlängsrichtung über die Seitenwand (15). Die andere und nach innen gekehrte Seitenwand (15) kann glatt und ohne Vertiefungen oder Erhebungen ausgebildet sein. Die nach außen zeigenden Vertiefungen (19) bzw. das außen liegende Waffelmuster (21) reißt beim Nassschnitt Flüssigkeitspartikel mit sich und bewirkt dadurch eine deutlich verbesserte außenseitige Kühlung der Trennsegmente (8).

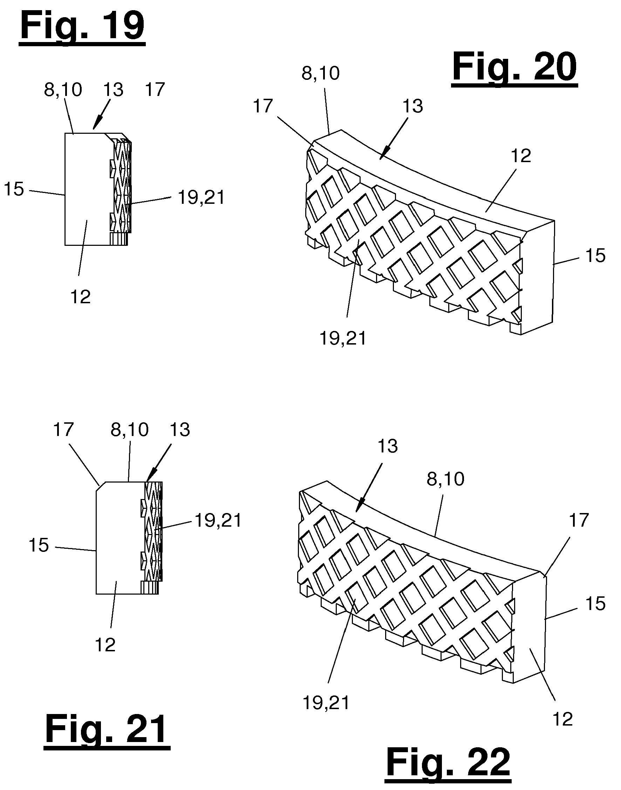

Figur 19 bis 22 zeigen Varianten, die sich durch die Zahl und Anordnung der Fasen (17) vom Ausführungsbeispiel der Figur 15 bis 18 unterscheiden. Die sonstigen Formmerkmale können gleich sein. Dies betrifft insbesondere die außenseitigen Vertiefungen (19) bzw. das Waffelmuster (21).

In der Ausführungsform von Figur 19 und 20 ist an der Oberseite (13) eine einzelne randseitige Fase (17) vorhanden, die zur Außenseite des Trennsegments (8) weist. Die Oberseite (13) ist ansonsten eben.

In der Variante von Figur 21 und 22 ist ebenfalls eine einzelne randseitige Fase (17) an der Oberseite (13) vorhanden, die hier in die andere Richtung und zur Innenseite des Trennsegments (8) und des Trennwerkzeugs (1) weist.

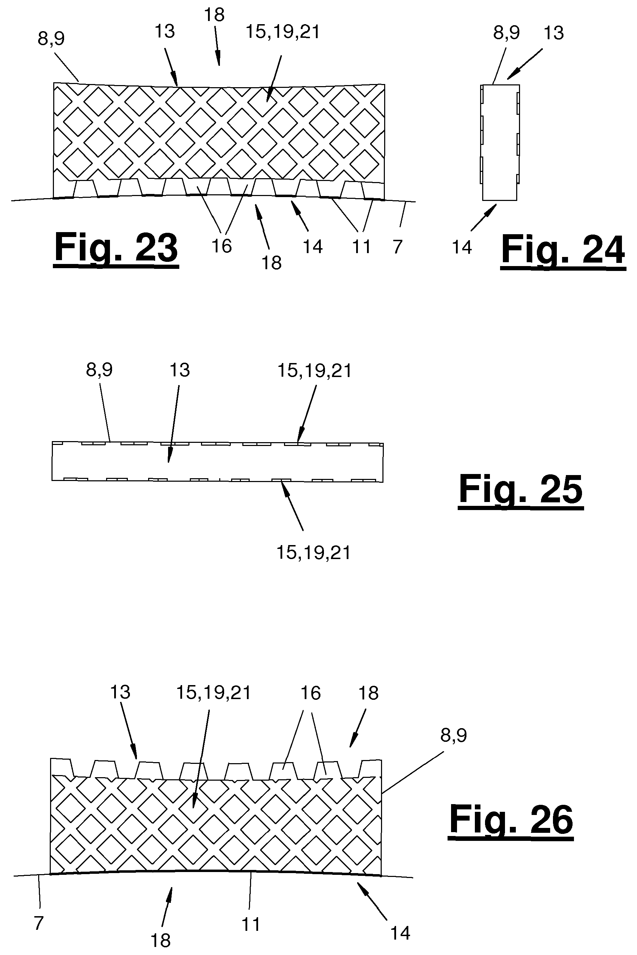

Figur 23 bis 28 zeigen ein Trennsegment (8), welches sich für die Verwendung als Schneidsegment (9) eignet. Das Trennsegment (8) hat eine im wesentlichen gerade Erstreckung, wobei es an der Oberseite (18) und/oder an der Unterseite (14) jeweils eine Wölbung (18) aufweisen kann und in diesem Bereich an die Formgebung des Grundkörpers (4) und insbesondere seines Randbereichs (7) angepasst ist. Das Trennsegment (8) kann auch an einer oder beiden Seitenflächen (15) Vertiefungen (19) oder die Waffelform (21) aufweisen.

Das gezeigte Trennsegment (8) ist auch in diesem Fall beidseits verwendbar und kann wahlweise an den Grundkörper (8) gelötet oder mit einem der besagten Impulsschweißverfahren angeschweißt werden. Hierzu weist das Trennsegment (8) in der Variante von Figur 23 bis 25 im Fußbereich (14) die besagten zahnartigen Vorsprünge (16) bzw. eine Rändelung auf, die zur Bildung von Impulsschweißverbindungen an den Verbindungsstellen (11) zwischen Zahnköpfen und Rand (7) vorteilhaft ist. Die Wölbung (18) an der Oberseite (13) ist genau so wie die vorbeschriebenen Fasen (17) für die Schneidwirkung und zum Anschärfen der Trennsegmente (8) günstig.

In der Variante von Figur 26 ist die umgekehrte Anordnung dargestellt, bei der die Vorsprünge (16) sich an der Oberseite (13) befinden und die Schneidfläche bilden. Die mit der Wölbung (18) versehene vorsprungfreie Unterseite (14) ist an den Randbereich (7) des Grundkörpers (4) angelötet und hat eine entsprechend große Verbindungsstelle oder Verbindungsfläche (11).

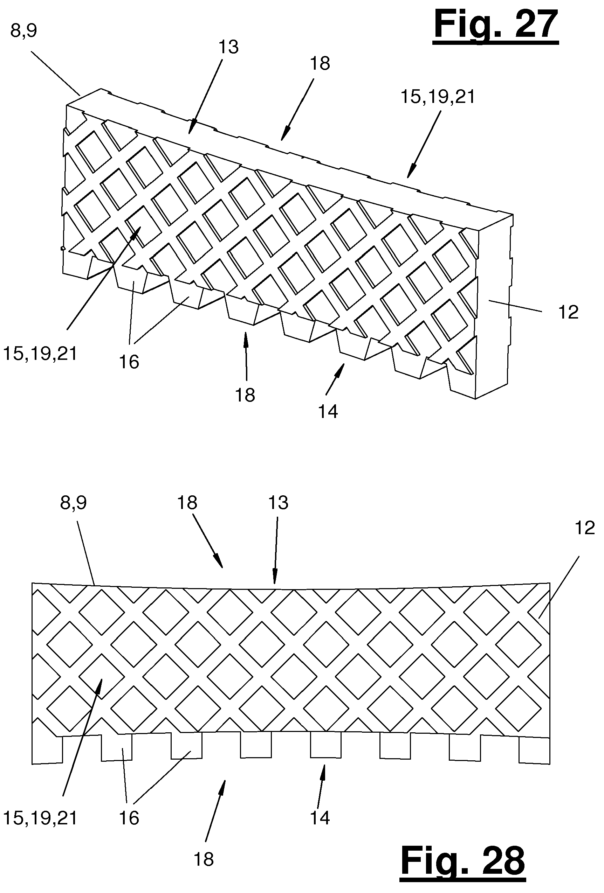

Figur 27 und 28 zeigen die Variante von Figur 22 bis 25 noch einmal in verschiedenen Ansichten und in einer vergrößerten Darstellung. Hierbei werden auch verschiedene Formen der Vorsprünge (16) als Rechteckzähne oder Trapezzähne dargestellt.

Aus den verschiedenen Ausführungsformen mit seitlichen Vertiefungen (19) oder Waffelmuster (21) ist außerdem ersichtlich, dass in diesem Bereich der Segmentkörper (12) eine größere Dicke als im Bereich der Vorsprünge (16) haben kann. Die Rippen oder Erhebungen des Waffelmusters (21) stehen nach außen über die Oberfläche der Vorsprünge (16) über. Die Vertiefungen (19) oder Waffelmuster (21) können auch Bestandteil des härteren Randbereichs ((22) sein.

In Abwandlung der Ausführungsformen von Figur 23 bis 28 können die seitlichen Vertiefungen (19) oder das Waffelmuster (21) nur an einer Seitenwand (15) vorhanden sein. Sie können alternativ auch entfallen.

Die Vorsprünge (16) können auch in Form von mehreren Pyramidenstümpfen oder runden Buckeln, mit oder ohne Schneidgrat vorliegen, wie dies in Figur 29 und 30 dargestellt ist. Eine derartige Ausbildung ist für eine noch gezieltere Stromkonzentration vorteilhaft, wobei an den Kanten der Vorsprünge (16) im wesentlichen stumpfe Kantenwinkel vorliegen. Hierdurch werden die Kantenbereiche der Trennsegmente (8) beim Schweißen weniger stark belastet, was Vorteile für eine gleichmäßige Ausbildung der Schweißstelle (11) haben kann. Ferner ist diese Form der Vorsprünge (16) günstig für das Auslösen der Trennsegmente (8) aus einer Pressform.

Der eingangs beschriebene Schichtaufbau und das Herstellungsverfahren für die Trennsegmente (8) gilt auch für die Ausführungsbeispiele der Figuren 5 bis 30. Alternativ kann hier der Aufbau des Segmentkörpers (12) auch durchgehend homogen sein.

Abwandlungen der beschriebenen Ausführungsformen sind in verschiedener Weise möglich. Insbesondere können die Einzelmerkmale der verschiedenen Varianten beliebig miteinander kombiniert und untereinander vertauscht werden. Ferner sind andere Formgebungen der Trennwerkzeuge (1), ihrer Grundkörper (4) und der Trennsegmente (8) möglich.

### BEZUGSZEICHENLISTE

- 1: Trennwerkzeug
- 2: Trennscheibe
- 3: Bohrkrone
- 4: Grundkörper
- 5: Stammblatt
- 6: Tragrohr
- 7: Randbereich
- 8: Trennsegment
- 9: Schneidsegment
- 10: Bohrsegment
- 11: Verbindungsstelle, Schweißstelle
- 12: Segmentkörper
- 13: Oberseite
- 14: Unterseite, Fußbereich
- 15: Seitenwand
- 16: Vorsprung, Rändelung, Zahn
- 17: Fase
- 18: Wölbung
- 19: Vertiefung
- 20: Waffelform
- 21: Mittelbereich
- 22: Randbereich
- 23: Matrix / Bindung / Trägermaterial
- 23': Matrix / Bindung / Trägermaterial
- 24: Schleifpartikel / Harter Partikel
- 25: Schweißvorrichtung
- 26: Schweißstromquelle
- 27: Elektrode
- 28: Kondensator / Energiespeicher
- 29: Leitung
- 30: Netzanschluss
- 31: Stromfluss
- 32: Zündeinrichtung

- F: Presskraft

## Patentansprüche

1. Verfahren zur Herstellung eines Trennwerkzeugs (1) aus einem Grundkörper (4) und einem oder mehreren Trennsegmenten (8), die am Grundkörper (4) befestigt werden, **dadurch gekennzeichnet, dass** die Trennsegmente (8) am Grundkörper (4) durch Kondensatorentladungsschweißen befestigt werden.

2. Verfahren nach Anspruch 1, **dadurch gekennzeichnet, dass** an der Verbindungsstelle (11) der Strom durch zahnartige, buckelartige oder sonstige die Kontaktfläche verkleinernde Vorsprünge (16) konzentriert wird, die am Trennsegment (8) und/oder am Grundkörper (4) angeordnet sind.

3. Verfahren nach Anspruch 2, **dadurch gekennzeichnet, dass** ein Trennsegment (8) während des Schweißvorgangs mit ein oder mehr Vorsprüngen (16) in den Grundkörper (4) eingedrückt wird, wobei ein oder mehrere andere Teile des Fußbereichs (14) des Trennsegments (8) mit dem Grundkörper (4) in schweißverbindungsfreie Anlage kommen.

4. Verfahren nach Anspruch 1, 2 oder 3, **dadurch gekennzeichnet, dass** bei der Herstellung des Trennsegments (8) die Zusammensetzung seines Trägermaterials (23,23') und/oder die Konzentration von harten Schleif- oder Schneidpartikeln (24) im Trägermaterial (23,23') verändert wird.

5. Verfahren nach einem der Anspruch 1 bis 4, **dadurch gekennzeichnet, dass** die bevorzugt gesinterten Trennsegmente (8) liegend gepresst und mit einem Querschnitts-Schichtaufbau versehen werden, der an einer oder beiden Außenseiten härter als im Mittelbereich ist.

6. Verfahren nach einem der Anspruch 1 bis 5, **dadurch gekennzeichnet, dass** die Trennsegmente (8) zumindest im Fußbereich (14) aus einem elektrisch leitenden Material bestehen.

7. Trennwerkzeug mit einem Grundkörper (4) und mit mindestens einem Trennsegment (8), die an einer Verbindungsstelle (11) miteinander verbunden sind, wobei das Trennsegment (8) harte Schleif- oder Schneidpartikel (24), insbesondere Diamantpartikel, in einem Trägermaterial (23,23') enthält, **dadurch gekennzeichnet, dass** die Verbindungsstelle (11) als Kondensatorentladungs-Schweißstelle ausgebildet ist.

8. Trennwerkzeug nach Anspruch 7, **dadurch gekennzeichnet, dass** der aus einem gesinterten Material bestehende Segmentkörper (12) des Trennsegments (8) an seinem zum Schweißen vorgesehenen Fußbereich (14) mehrere zahnartige Vorsprünge (16) aufweist und/oder der Grundkörper (4) an der Verbindungsstelle (11) stromkonzentrierende Vorsprünge (16) aufweist.

9. Trennwerkzeug nach Anspruch 7 oder 8, **dadurch gekennzeichnet, dass** der Segmentkörper (12) an seinem zum Schweißen vorgesehenen Fußbereich (14) harte Schleif- oder Schneidpartikel (24), insbesondere Diamantpartikel, enthält.

10. Trennwerkzeug nach Anspruch 7, 8 oder 9, **dadurch gekennzeichnet, dass** die Trennsegmente (8) zumindest im Fußbereich (14) aus einem elektrisch leitenden Material bestehen.

11. Trennwerkzeug nach einem der Ansprüche 7 bis 10, **dadurch gekennzeichnet, dass** der Segmentkörper (12) unterschiedliche Trägermaterialien (23,23') aufweist und mehrschichtig ausgebildet ist.

12. Trennwerkzeug nach einem der Ansprüche 7 bis 11, **dadurch gekennzeichnet, dass** das Trennsegment (8) mindestens eine Fase (17) und/oder an mindestens einer Seitenwand (15) mindestens eine Vertiefung (19) aufweist.

13. Trennwerkzeug nach einem der Ansprüche 7 bis 12, **dadurch gekennzeichnet, dass** das Trennwerkzeug (1) als Trennscheibe (2) oder als Bohrkrone (3) ausgebildet ist.

14. Trennwerkzeug nach Anspruch 13, **dadurch gekennzeichnet, dass** ein als Bohrkrone (3) ausgebildetes Trennwerkzeug (1) einen als zylindrisches Tragrohr (6) ausgebildeten Grundkörper (4) aufweist, an dessen freien stirnseitigen Rand (7) ein oder mehrere Trennsegmente (8) mit axialer Ausrichtung angeordnet sind und eine der Rohrkrümmung angepasste Wölbung (18) haben.

15. Trennwerkzeug nach Anspruch einem der Ansprüche 7 bis 14, **dadurch gekennzeichnet, dass** ein Trennsegment (8) während des Schweißvorgangs mit ein oder mehr Vorsprüngen (16) in den Grundkörper (4) eingedrückt ist, wobei ein oder mehrere andere Teile des Fußbereichs (14) des Trennsegments (8) mit dem Grundkörper (4) in schweißverbindungsfreier Anlage sind.

## Claims

1. Method for producing a cutting tool (1) from a main body (4) and one or more cutting segments (8) which are fastened to the main body (4), **characterized in that** the cutting segments (8) are fastened to the main body (4) by capacitor discharge welding.

2. Method according to Claim 1, **characterized in that**, at the connecting point (11), the current is concentrated by tooth-like, stud-like or other protrusions (16) that reduce the size of the contact face, said protrusions (16) being arranged on the cutting segment (8) and/or on the main body (4).

3. Method according to Claim 2, **characterized in that** one cutting segment (8) is pushed into the main body (4) by way of one or more protrusions (16) during the welding operation, wherein one or more other parts of the root region (14) of the cutting segment (8) come into weld-free abutment with the main body (4).

4. Method according to Claim 1, 2 or 3, **characterized in that**, during the production of the cutting segment (8), the composition of its carrier material (23, 23') and/or the concentration of hard grinding or cutting particles (24) in the carrier material (23, 23') is varied.

5. Method according to one of Claims 1 to 4, **characterized in that** the preferably sintered cutting segments (8) are pressed in a horizontal manner and are provided with a cross-sectional layer structure which is harder at one or both outer sides than in the central region.

6. Method according to one of Claims 1 to 5, **characterized in that** the cutting segments (8) consist of an electrically conductive material at least in the root region (14).

7. Cutting tool having a main body (4) and having at least one cutting segment (8) which are connected together at a connecting point (11), wherein the cutting segment (8) contains hard grinding or cutting particles (24), in particular diamond particles, in a carrier material (23, 23'), **characterized in that** the connecting point (11) is configured as a capacitor discharge welding point.

8. Cutting tool according to Claim 7, **characterized in that** the segment body (12), consisting of a sintered material, of the cutting segment (8) has a plurality of tooth-like protrusions (16) in its root region (14) provided for welding, and/or the main body (4) has current-concentrating protrusions (16) at the connecting point (11).

9. Cutting tool according to Claim 7 or 8, **characterized in that** the segment body (12) contains hard grinding or cutting particles (24), in particular diamond particles, in its root region (14) provided for welding.

10. Cutting tool according to Claim 7, 8 or 9, **characterized in that** the cutting segments (8) consist, at least in the root region (14), of an electrically conductive material.

11. Cutting tool according to one of Claims 7 to 10, **characterized in that** the segment body (12) has different carrier materials (23, 23') and is formed in a multilayer manner.

12. Cutting tool according to one of Claims 7 to 11, **characterized in that** the cutting segment (8) has at least one chamfer (17) and/or, at at least one side wall (15), at least one depression (19).

13. Cutting tool according to one of Claims 7 to 12, **characterized in that** the cutting tool (1) is configured as a cutting disc (2) or as a core bit (3).

14. Cutting tool according to Claim 13, **characterized in that** a cutting tool (1) configured as a core bit (3) has a main body (4) configured as a cylindrical supporting tube (6), at the free end-side edge (7) of which one or more cutting segments (8) are arranged with an axial orientation and have a curvature (18) adapted to the curve of the tube.

15. Cutting tool according to one of Claims 7 to 14, **characterized in that** one cutting segment (8) is pushed into the main body (4) by way of one or more protrusions (16) during the welding operation, wherein one or more other parts of the root region (14) of the cutting segment (8) come into weld-free abutment with the main body (4).

## Revendications

1. Procédé de fabrication d'un outil à tronçonner (1), constitué d'un corps de base et d'un ou plusieurs segments tronçonneurs (8), qui sont fixés au corps de base (4), **caractérisé en ce que** les segments tronçonneurs (8) sont fixés au corps de bas par soudure à impulsions électrostatiques.

2. Procédé selon la revendication 1, **caractérisé en ce que**, au niveau du point de raccordement (11), le courant est concentré par des protubérances (16), en forme de dents, en forme de bossages ou ayant une autre forme, qui diminuent l'aire de contact, protubérances qui sont disposées contre le segment tronçonneur (8) et/ou contre le corps de base (4).

3. Procédé selon la revendication 2, **caractérisé en ce qu'**un segment tronçonneur (8) est enfoncé dans le corps de base (4) pendant l'opération de soudage avec une ou plusieurs protubérances (16), une ou plusieurs autres parties de la zone de pied (14) du segment tronçonneur (8) venant s'appuyer sans assemblage par soudure au corps de base (4).

4. Procédé selon la revendication 1, 2 ou 3, **caractérisé en ce que**, lors de la fabrication du segment tronçonneur (8), on modifie la composition de son matériau support (23, 23') et/ou la concentration des particules dures abrasives ou de coupe (24) dures dans le matériau support (23, 23').

5. Procédé selon l'une des revendications 1 à 4, **caractérisé en ce que** les segments tronçonneurs (8), de préférence frittés, sont pressés à plat et pourvus d'une structure de couches en coupe transversale, qui sur l'une des faces extérieures, ou sur les deux, est plus dure que dans la zone centrale.

6. Procédé selon l'une des revendications 1 à 5, **caractérisé en ce que** les segments tronçonneurs (8) sont, au moins dans la zone de pied (14), constitués d'un matériau conducteur de l'électricité.

7. Outil à tronçonner, comportant un corps de base (4) et au moins un segment tronçonneur (8), qui sont reliés l'un à l'autre au niveau d'un point de raccordement (11), le segment tronçonneur (8) contenant des particules dures abrasives ou de coupe (24), en particulier des particules de diamant, dans un matériau support (23, 23'), **caractérisé en ce que** le point de raccordement (11) est conçu comme un site de soudage à impulsions électrostatiques.

8. Outil à tronçonner selon la revendication 7, **caractérisé en ce que** le corps (12) du segment tronçonneur (8), constitué d'un matériau fritté, comprend dans sa zone de pied (14) prévue pour le soudage plusieurs protubérances (16) en forme de dents, et/ou le corps de base (4) comprend au niveau du point de raccordement (11) des protubérances (16) concentratrices de courant.

9. Outil à tronçonner selon la revendication 7 ou 8, **caractérisé en ce que** le corps de segment (12) contient dans sa zone de pied (14) prévue pour le soudage, des particules abrasives ou de coupe dures (24), en particulier des particules de diamant.

10. Outil à tronçonner selon la revendication 7, 8 ou 9, **caractérisé en ce que** les segments tronçonneurs (8) sont au moins dans la zone de pied (14) constitués d'un matériau conducteur de l'électricité.

11. Outil à tronçonner selon l'une des revendications 7 à 10, **caractérisé en ce que** le corps de segment (12) comprend différents matériaux supports (23, 23') et est conçu multicouche.

12. Outil à tronçonner selon l'une des revendications 7 à 11, **caractérisé en ce que** le segment tronçonneur (8) comprend au moins un biseau (17) et/ou, sur au moins une paroi latérale (15), au moins un renfoncement (19).

13. Outil à tronçonner selon l'une des revendications 7 à 12, **caractérisé en ce que** l'outil à tronçonner (1) est conçu comme une meule tronçonneuse (2) ou comme un trépan (3).

14. Outil à tronçonner selon la revendication 13, **caractérisé en ce qu'**un outil à tronçonner (1), conçu comme un trépan (3), comprend un corps de base (4) conçu comme un tube support cylindrique (6), corps de base en l'extrémité avant libre (7) duquel un ou plusieurs segments tronçonneurs (8) sont disposés selon une orientation axiale, et possèdent une courbure (18) adaptée à la courbure du tube.

15. Outil à tronçonner selon l'une des revendications 7 à 14, **caractérisé en ce qu'**un segment tronçonneur (8) est, pendant l'opération de soudage, avec une ou plusieurs protubérances (16), enfoncé dans le corps de base (4), une ou plusieurs autres parties de la zone de pied (14) du segment tronçonneur (8) venant s'appuyer contre le corps de base (4) sans assemblage par soudure.
